# EUROPÄISCHE PATENTSCHRIFT

(11) **EP 2 812 598 B1**
(45) Veröffentlichungstag und Bekanntmachung des Hinweises auf die Patenterteilung: **20.07.2016**
(21) Anmeldenummer: 13707806.9
(22) Anmeldetag: 06.02.2013
(51) Int. Cl.: F16F 9/46

(54) **DÄMPFERVENTIL, INSBESONDERE FÜR STOSSDÄMPFER VON FAHRZEUGEN, MIT EINSTELLBARER DÄMPFUNGSKRAFT**
DAMPING VALVE, IN PARTICULAR FOR SHOCK ABSORBERS OF VEHICLES, WITH ADJUSTABLE DAMPING FORCE
SOUPAPE D'AMORTISSEMENT, EN PARTICULIER POUR DES AMORTISSEURS DE CHOCS DE VÉHICULES AUTOMOBILES, DONT LA FORCE D'AMORTISSEMENT EST RÉGLABLE

(30) Priorität: 09.02.2012 DE 102012201963
(43) Veröffentlichungstag der Anmeldung: 17.12.2014
(73) Patentinhaber: ThyssenKrupp Bilstein GmbH, 58256 Ennepetal (DE); ThyssenKrupp AG, 45143 Essen (DE)
(72) Erfinder: ZELANO, Frank, 78112 St. Georgen (DE); NIETHAMMER, Bernd, 78126 Königsfeld (DE); ARNDT, Klaus, 18551 Lohme (DE)
(74) Vertreter: Westphal, Mussgnug & Partner Patentanwälte mbB
(86) Internationale Anmeldenummer: PCT/DE2013/100042
(87) Internationale Veröffentlichungsnummer: WO 2013/117191

(56) Entgegenhaltungen:
- DE-A1- 4 108 026
- DE-A1- 4 137 403
- DE-A1-102006 014 463
- DE-C1- 3 719 113

## Beschreibung

Die Erfindung betrifft ein Dämpferventil, insbesondere für Stoßdämpfer von Fahrzeugen, mit einstellbarer Dämpfungskraft gemäß den Merkmalen des Oberbegriffs des Anspruchs 1.

Solche Dämpferventile sind z. B. aus DE 41 37 403 A1, DE 10 2006 014 463 A1 und DE 37 19 113 C1 bekannt.

Solche Dämpferventile sind hinlänglich bekannt und weisen regelmäßig einen Elektromagneten auf, mit dem ein Ventilschieber bewegt wird, um eine zwischen einem Zulauf und einem Ablauf liegende Austrittsöffnung mehr oder weniger zu verschließen, um damit für eine Drosselwirkung zu sorgen. Ist die Austrittsöffnung verhältnismäßig weit offen, wir ein komfortables Fahrwerk geschaffen. Soll das Fahrzeug ein "hartes" Fahrwerk erhalten, wird die Drosselung verstärkt, d. h. die Austrittsöffnung mehr geschlossen. Dadurch kann ein sportliches Fahrwerk erzielt werden und bei hohen Geschwindigkeiten eine bessere Stabilisierung des Fahrzeuges.

Ein Beispiel für ein solches elektromagnetisch gesteuertes Dämpferventil ist in DE 41 08 026 A1 beschrieben. Dort ist das Dämpferventil als einstufiges bzw. zweistufiges Schieberventil ausgebildet, wobei die Schieberposition in Abhängigkeit von der über dem Dämpferventil abfallenden hydraulischen Druckdifferenz, dem durch das Dämpferventil fließenden Volumenstrom sowie dem Ansteuerstrom der elektromagnetischen Betätigung bestimmt wird. Problematisch bei diesem Dämpferventil ist die Tatsache, dass sich der hülsenförmig ausgebildete Ventilschieber zum abschnittsweisen Verschließen der Austrittsöffnung und damit zur Erzielung der Drosselwirkung mit einer Spuleneinrichtung gekoppelt ist, die zusammen mit dem Ventilschieber bewegt wird. Dies bedingt einen sehr komplizierten Aufbau und ist zudem auf Grund der Axialbewegung der Spulen störanfällig.

Darüber hinaus sind auch Dämpferventile bekannt, bei denen zwar der Elektromagnet feststehend innerhalb des Gehäuses des Dämpferventils angeordnet ist. Dabei ist der im Elektromagneten vorhandene Anker feststehend mit einem Außenventilschieber verbunden. Dieser zylindrisch gestaltete Außenventilschieber muss zu seiner Lagerung aber ein innerhalb des Außenventilschiebers befindliches Lagerteil übergreifen. Hierbei wird eine besonders konturierte Austrittsöffnung von dem Außenventilschieber stirnseitig mehr oder weniger, je nach axialer Stellung des Außenventilschiebers, verschlossen. Problematisch bei einem solchen Dämpferventil ist einerseits die hohe Anzahl von Bauelementen und andererseits, dass Schiefstellungen des Außenventilschiebers zu einem Verklemmen und damit einer Fehlfunktion des Dämpferventils führen können. Diese bekannten Dämpferventile müssen daher mit viel Lagerspiel gefertigt werden. Insgesamt hat sich herausgestellt, dass bei diesen Dämpferventilen hohe Leckageverluste zu verzeichnen sind. Zusätzlich ist problematisch, dass zur Erzielung einer hyperbelartig ansteigenden Steuerkurve, also des Verhältnisses Ankerhub zu Öffnungsquerschnitt, eine sehr komplexe und damit komplizierte geometrische Form der Austrittsöffnung gewählt werden muss, was ebenfalls sehr aufwändig ist und die Fertigung solcher Dämpferventile erschwert. Insgesamt ergibt sich aufgrund der komplexen Bauteile sowohl für die Montage als auch Einstellung des Dämpferventils ein erhöhter Aufwand.

Das Ziel der vorliegenden Erfindung besteht deshalb darin, ein Dämpferventil, insbesondere für Stoßdämpfer von Fahrzeugen, derart anzugeben, dass dieses einerseits einfacher herstellbar ist und sich durch geringe Leckageverluste und eine geringe Anzahl von Bauteilen auszeichnet.

Dieses Ziel wird durch ein Dämpferventil mit den Merkmalen des Anspruchs 1 gelöst.

Weiterbildungen der Erfindung sind Gegenstand der Unteransprüche.

Die Idee der vorliegenden Erfindung besteht im Wesentlichen also darin, dass mindestens zwei unterschiedlich große und als Bohrungen ausgebildete Austrittsöffnungen vorgesehen sind und welche vom Ventilschieber, je nach gewünschter Drosselwirkung, mehr oder weniger radial abdichtbar sind. Bei einem derartigen Dämpferventil sind keine sehr komplexen Konturen der Austrittsöffnungen mehr notwendig. Es reicht vielmehr aus, kreisrunde und damit einfach herzustellende Bohrungen mit unterschiedlich großem Durchmesser vorzusehen. Die Austrittsöffnungen können dabei axial - bezogen auf eine Mittenachse des Dämpferventils - versetzt zueinander angeordnet sein. Durch die Wahl der Bohrungsdurchmesser können unterschiedlichste Drosselquerschnitte erzeugt werden.

Es hat sich als zweckmäßig herausgestellt, vier Austrittsöffnungen vorzusehen, wobei sich diese Austrittsöffnungen vorzugsweise jeweils im Winkel von 90° zueinander verteilen. Zwei jeweils gleich große Austrittsöffnungen liegen sich dabei jeweils diametral gegenüber.

Zur Erzielung einer günstigen Kennlinie in Bezug auf das Verhältnis Ankerhub/Gesamtöffnungsquerschnitt der Austrittsöffnungen hat es sich als günstig erwiesen, alle oder einen Teil der Austrittsöffnungen mit ihrem Öffnungsmittelpunkt bezogen auf eine Mittenachse X des Dämpferventils zueinander axial versetzt anzuordnen.

Es kann jedoch auch vorgesehen werden, dass die Öffnungsmittelpunkte der Austrittsöffnungen zueinander versetzt sind. Dabei sollte jedoch weiterhin darauf geachtet werden, dass die unterschiedlich großen Austrittsöffnungen in Bezug auf den Ventilschieber so angeordnet sind, dass die große Austrittsöffnung bzw. die großen Austrittsöffnungen erst dann vom Ventilschieber geöffnet werden, wenn bereits die kleine Austrittsöffnung bzw. die kleinen Austrittsöffnungen vom Ventilschieber geöffnet sind.

Des Weiteren hat es sich als vorteilhaft herausgestellt, zwischen Anker und Ventilschieber einen Steuerstift vorzusehen, mit dem bei plötzlichen Druckanstiegen innerhalb des Dämpferventils ein größerer Durchfluss freigegeben wird, wodurch sich der Druck reduziert und damit plötzliche Druckspitzen, wie diese z. B. beim Überfahren eines Schlagloches auftreten deutlich besser abgedämpft werden. Ein ähnlicher Effekt wird erreicht, wenn anstelle eines solchen Steuerstiftes der Ventilschieber mit einer umlaufenden Differenzfläche, d. h. einem vergrößerten Außendurchmesser, versehen wird, um eine Differenzflächenfunktion zu bewirken. In der Figurenbeschreibung wird hierauf noch detaillierter eingegangen.

In der Erfindung ist vorgesehen, dass die unterschiedlich großen Austrittsöffnungen in ein Gehäuseteil des Dämpferventils, bevorzugt das Ventilsitzteil, eingearbeitet sind. Es kann jedoch anstelle dessen auch eine Hülse um den Ventilschieber angeordnet sein, in den diese Austrittsöffnungen eingebracht sind, wobei darauf zu achten ist, dass von den Austrittsöffnungen dieser Hülse aus ein ausreichend großer Kanal zur Ablaufkammer der Dämpferventils vorgesehen ist.

Das erfindungsgemäße Dämpferventil wird anschließend im Zusammenhang mit Figuren anhand von zwei Ausführungsbeispielen näher erläutert. Es zeigen:
- Fig. 1: ein erstes Ausführungsbeispiel des Dämpferventils mit in einem Ventilsitzteil eingearbeiteten, unterschiedlich großen Austrittsöffnungen sowie mit einem Steuerstift,
- Fig. 2: ein zweites Ausführungsbeispiel eines Dämpferventils nach der Erfindung mit einer um den Ventilschieber angeordneten Hülse, in die die unterschiedlich großen Austrittsöffnungen eingearbeitet sind sowie mit einer am Ventilschieber vorgesehenen Differenzfläche,
- Fig. 3: das in Figur 2 kreisförmig dargestellte Detail D im Bereich der Differenzfläche in starker Vergrößerung,
- Fig. 4: beispielhaft der Kennlinienverlauf Ankerhub/Öffnungsquerschnitt der Ventile von Fig. 1 und Fig. 2, und
- Fig. 5: beispielhaft die vorgesehenen unterschiedlich großen, kreisrunden Austrittsöffnungen in einer Abwicklung gesehen.

In den nachfolgenden Figuren bezeichnen, sofern nicht anders angegeben, gleiche Bezugszeichen gleiche Teile mit gleicher Bedeutung.

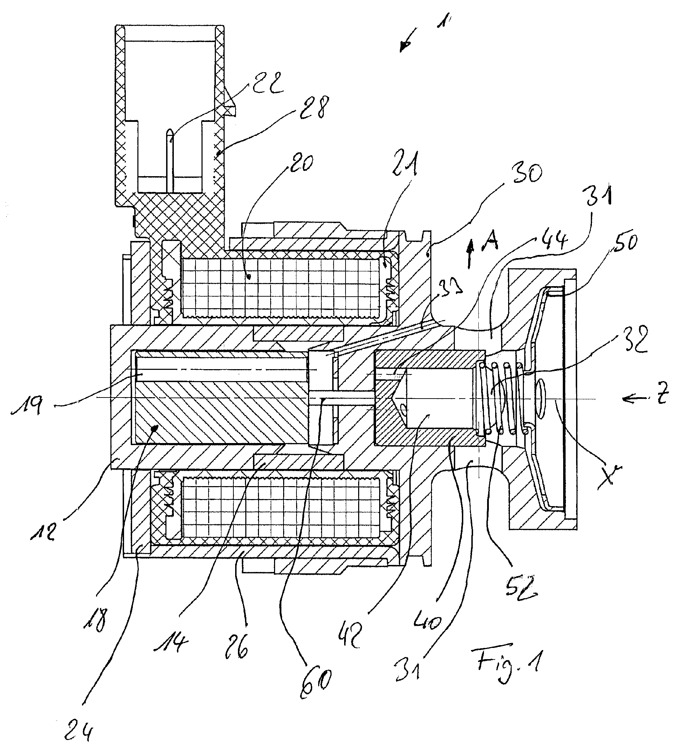

In Figur 1 ist ein erstes Ausführungsbeispiel eines Dämpferventils 1 dargestellt. Das Dämpferventil 1 weist eine Mittelachse X auf. Zentrisch zu dieser ist auf der linken Seite in Figur 1 ein topfförmiger, metallischer Polkern 12 angeordnet. An diesen Polkern 12 schließt sich ein metallischer Ringkörper 14 an. Rechts von diesem Ringkörper 14 befindet sich ein noch im Einzelnen zu erläuterndes Ventilsitzteil 30 aus Metall. Im Innern des Polkerns 12 sitzt ein Anker 18, der mit einer die gesamte Länge des Ankers 18 durchsetzenden Ausgleichsbohrung 19 versehen ist.

Rotationssymmetrisch sitzt auf der äußeren Wandung des Polkerns 12 und des Ringkörpers 14 sowie einem Teil des Ventilsitzes 30 ein Spulenträger 21 aus Kunststoff. Dieser Spulenträger 21 trägt eine Spule 20, welche mit einem Steckverbinder 22 elektrisch in Kontakt steht. Über diesen Steckverbinder 22 kann der Spule 20 Strom zugeführt werden, um den Anker 18 entsprechend der Bestromung axial zu bewegen. Die Spule 20 bildet zusammen mit dem Polkern 12 und dem Anker 18 einen Elektromagneten. Die gesamte Spule 20 und der Spulenträger 21 sind mit einer Kunststoffumspritzung 28 versehen, die zusätzlich noch kragenförmig den Steckverbinder 22 umgibt.

Auf der linken Seite des Dämpferventils 1 befindet sich eine metallische Rückschlussplatte 24, die auch als linksseitiger Gehäusedeckel fungiert. Die Spule 20 und Kunststoffumspritzung 28 ist von einer zylindrischen Gehäusewandung 26 umgeben. An diese zylindrische Gehäusewandung 26 schließt sich rechts ein plattenförmiger Abschnitt des Ventilsitzteils 30 an, der als rechtsseitiger Gehäusedeckel fungiert.

Das Ventilsitzteil 30 weist entlang der Mittenachse X eine gestufte Durchgangsbohrung auf. Etwa in der Mitte des Ventilsitzteils 30 sitzt ein topfförmig gestalteter Ventilschieber 40. Die topfförmige Öffnung des Ventilschiebers 40 ist mit dem Bezugszeichen 42 bezeichnet. In der Bodenwandung des Ventilschiebers 40 befindet sich eine den kompletten Boden parallel zur Mittelachse X durchsetzende Ausgleichsbohrung 44. Es sind beispielsweise zwei oder mehr solcher Ausgleichsbohrungen 44 im Boden des Ventilschiebers 40 eingearbeitet. Links vom Ventilschieber 40 verfügt das Ventilsitzteil 30 über eine Durchgangsbohrung mit verhältnismäßig kleinem Durchmesser, in welchem ein Steuerstift 60 axial geführt angeordnet ist. Der Steuerstift 60, der z. B. einen Durchmesser von 1 mm oder kleiner, also ewta 0,6 mm bis 0,8 mm, aufweist, ist zentrisch auf der Mittenachse X platziert und berührt sowohl mit seinem linken Ende den Anker 18 stirnseitig und mit seinem rechten Ende den Boden des Ventilschiebers 40 stirnseitig.

Das Ventilsitzteil 30 weist auf seiner in Figur 1 dargestellten rechten Seite einen sich erweiternden ringförmigen Flansch auf, in dem eine Einstellscheibe 50 beispielsweise durch Umbördelung festgelegt ist. An dieser Einstellscheibe 50 stützt sich eine Federeinrichtung 52 einenends und andernends an einer umlaufenden Stufe des rechten stirnseitigen Endes des Ventilschiebers 40 ab. Das Dämpferventil 1 weist einen Zulauf Z an der rechten Seite auf, der mit einem Ablauf A über mehrere Austrittsöffnungen, die als kreisrunde Bohrungen in die Wandung des Ventilsitzteiles 30 eingearbeitet sind. Im vorliegenden Ausführungsbeispiel sind vier solche Austrittsöffnungen vorgesehen. Die Austrittsöffnungen sind als kreisrunde Bohrungen gestaltet, wobei die Bohrungen unterschiedlich groß sind. Die beiden kleineren, sich diametral gegenüberliegenden Austrittsöffnungen sind mit dem Bezugszeichen 31 versehen. Die etwas größeren Austrittsöffnungen mit dem Bezugsezeichen 32, wobei die dem Betrachter zugewandte Austrittsbohrung aufgrund der Schnittdarstellung von Figur 1 nicht zu erkennen ist. Zu sehen ist halb verdeckt lediglich die dem Betrachter abgewandte Austrittsöffnung 32, die hinter der Federeinrichtung 52 in der Darstellung von Figur 1 in Erscheinung tritt.

Die zylindrische Außenwandung des Ventilschiebers 40 dient zum radialen Abdichten bzw. teilweise Abdichten der erwähnten Austrittsöffnungen 31, 32 und führt so zu einer Drosselwirkung, je nach dem, wie weit der Ventilschieber 40 in der Darstellung von Figur 1 von links nach rechts bewegt ist. Die Bewegung des Ventilschiebers 40 erfolgt dabei durch entsprechendes Bestromen der Erregerspule 20, wodurch sich der Anker 18 nach rechts bewegt. Der Anker 18 schiebt dabei den Steuerstift 60 ebenfalls nach rechts, welcher wiederum den Ventilschieber 40 entsprechend nach rechts bewegt und so für die gewünschte Drosselwirkung sorgt.

Der Vollständigkeit halber ist noch zu erwähnen, dass das Ventilsitzteil 30 eine Ausgleichsbohrung 33 aufweist, die den Ablauf A mit dem Raum, in dem sich der Anker bewegt, verbindet und für einen Druckausgleich sorgt.

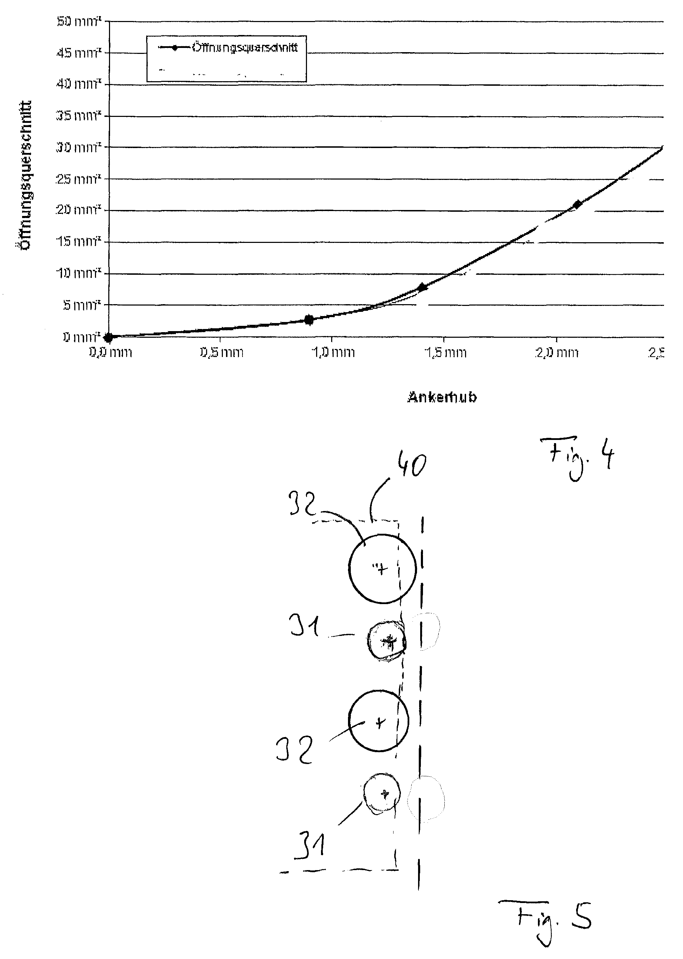

Die Anordnung der unterschiedlich großen vier Austrittsöffnungen 31, 32 wird im Zusammenhang mit Figur 5 deutlich. Dort sind die Austrittsöffnungen 31, 32 von Figur 1 in einer Abwicklung nochmals grafisch dargestellt. Die Austrittsöffnungen 31, 32 liegen mit ihrem Zentrum axial versetzt in Bezug auf die Mittenachse X des Dämpferventils 1. Der Ventilschieber 40 ist in Figur 5 ebenfalls in Abwicklung schematisch dargestellt und strichliert angedeutet. Der Ventilschieber 40 befindet sich in Figur 5 genau in der Stellung, in der er gerade die kleineren Austrittsöffnungen 31 komplett überdeckt und damit vollständig verschließt. Es ist deutlich zu erkennen, dass ein vollständiges Öffnen der größeren Austrittsöffnungen 32 erst erfolgen kann, wenn der Ventilschieber 40 bereits durch eine Linksbewegung die kleinen Austrittsöffnungen vollständig freigegeben hat.

Mit einer derartigen Anordnung von kreisrunden vier Austrittsöffnungen 31, 32, die paarweise unterschiedlich groß sind, lässt sich beispielsweise die in Figur 4 dargestellte hyperbelartige Steuerkurve erreichen. In der dargestellten Steuerkurve ist die Abhängigkeit des Öffnungsquerschnittes in Abhängigkeit des Ankerhubes des Ankers 18 dargestellt. Als Öffnungsquerschnitt ist dabei der Gesamtöffnungsquerschnitt aller vier Austrittsöffnungen 31, 32 bezeichnet.

Wenngleich im Zusammenhang mit Figur 5 erwähnt wurde, dass die Zentren der vier Austrittsöffnungen 31, 32 auf gleicher axialer Höhe zur Mittenachse X des Dämpferventils 1 liegen, muss dies nicht so sein. Die Zentren können auch zueinander versetzt liegen. Wesentlich ist lediglich, dass ein vollständiges Verschließen bzw. Öffnen der kleineren Austrittsöffnungen 31 und der größeren Austrittsöffnungen 32 erst nacheinander erfolgt.

Es liegt darüber hinaus im Rahmen der Erfindung, auch mehr als vier Austrittsöffnungen vorzusehen oder aber drei oder vier unterschiedlich große Austrittsöffnungen in das Dämpferventil 1 einzuarbeiten. Wesentlich für die Erfindung ist, dass die Austrittsöffnungen als einfache, vorzugsweise kreisrunde Bohrungen ausgebildet sind.

Die Montage des in Figur 1 dargezeigten Dämpferventils 1 ist besonders einfach und erfolgt von links nach rechts. Zwischen dem Spulenkörper 21 wird zuerst der Polkern 12 mit dem metallischen Ringkörper 14 eingeschoben. Anschließend wird der Anker 18 in den Polkern 12 geschoben. In das Ventilsitzteil 30 wird der Steuerstift 60 und der Ventilschieber 40 eingesetzt. Anschließend wird das so bestückte Ventilsitzteil 30 in Richtung Anker 18 geschoben. Schließlich wird die Federeinrichtung 52 auf die rechte Stirnseite des Ventilschiebers 40 gesetzt und über die Einstellscheibe 50 festgelegt. Die axial korrekte Positionierung der Einstellscheibe 50 erfolgt dabei in einem besonderen Messschritt bei der Montage des Dämpferventils 1, um einen bestimmten Arbeitspunkt des Dämpferventils 1 einzustellen. Ist der Arbeitspunkt festgelegt, wird die Einstellscheibe 50 an dem umlaufenden Kragen des Ventilsitzteils 30 festgelegt, beispielsweise durch Umbördelung oder Ähnlichem.

Die Wirkungsweise des in Figur 1 dargestellten Dämpferventils 1 stellt sich folgendermaßen dar. Dabei ist zu beachten, dass das gesamte Dämpferventil 1 druckausgeglichen ist. Dies bedeutet, dass der im Zulauf Z herrschende Druck innerhalb des Ventilschiebers 40 und aufgrund der dort im Boden vorgesehenen Bohrung 44 auch links zwischen der Wandung des Ventilsitzteils 30 und dem Boden des Ventilschiebers 40 ansteht. Der Anker 18 ist ebenfalls druckausgeglichen über den Kanal 33, der den Raum rechts und links vom Anker 18 aufgrund der Ausgleichsbohrung 19 und der im Ventilsitzteil 30 befindlichen Kanals 33 verbindet.

Die einstellbare Dämpfungskraft des Dämpferventils 1 wird durch ein mehr oder weniger starkes radiales Abdichten der Austrittsöffnungen 31, 32 mittels der radialen Außenfläche des Ventilschiebers 40 erreicht. In Figur 1 ist der Ventilschieber 40 in seiner maximal linken sitzend Position dargestellt. In dieser Position sind die vier Austrittsöffnungen 31, 32 verhältnismäßig wenig vom Ventilschieber 40 radial abgedichtet. Bei Bestromung der Spule 20 bewegt sich der Anker 18 nach rechts, wodurch der Steuerstift 60 den Ventilschieber 40 ebenfalls nach rechts bewegt, um die Austrittsöffnungen 31, 32 weiter zu verschließen.

Soll das Fahrzeug ein "hartes Fahrwerk" erhalten, wird die Drosselung verstärkt und damit der Gesamtquerschnitt der Austrittsöffnungen 31, 32 verkleinert. Dadurch kann ein sportliches Fahrwerk erzielt werden oder bei hohen Geschwindigkeiten eine bessere Stabilisierung. Für ein komfortables Fahrwerk und eine weiche Dämpfung wird die Drosselung reduziert und ein größerer Querschnitt der Austrittsöffnungen 31, 32 eingestellt, beispielsweise wie die Figur 1 dargestellte maximale linke Stellung des Ventilschiebers 40.

Mit dem Dämpferventil 1 von Figur 1 ist es jedoch aufgrund des verwendeten Steuerstiftes 60 und den vorgesehenen Ausgleichsbohrungen 19, 44 und 33 möglich, dass bei einem plötzlichen Druckanstieg kurzfristig ein größerer Durchfluss durch die Austrittsöffnungen 31, 32 freigegeben wird, wodurch sich der Druck reduziert und plötzliche Druckanstiege, wie diese beispielsweise beim Überfahren eines Schlagloches erfolgen, deutlich besser abgefangen werden. Bei einem plötzlichen Druckanstieg schiebt nämlich der Steuerstift 60 den Anker 18 nach links, wodurch sich auch der Ventilschieber 40 nach links bewegen kann. Voraussetzung ist natürlich, dass sowohl der Anker 18 samt Steuerstift 60 und Ventilschieber 40 sich nicht in der in Figur 1 dargestellten Anfangsstellung, sondern insgesamt etwas nach rechts durch Bestromung der Spule 20 befinden.

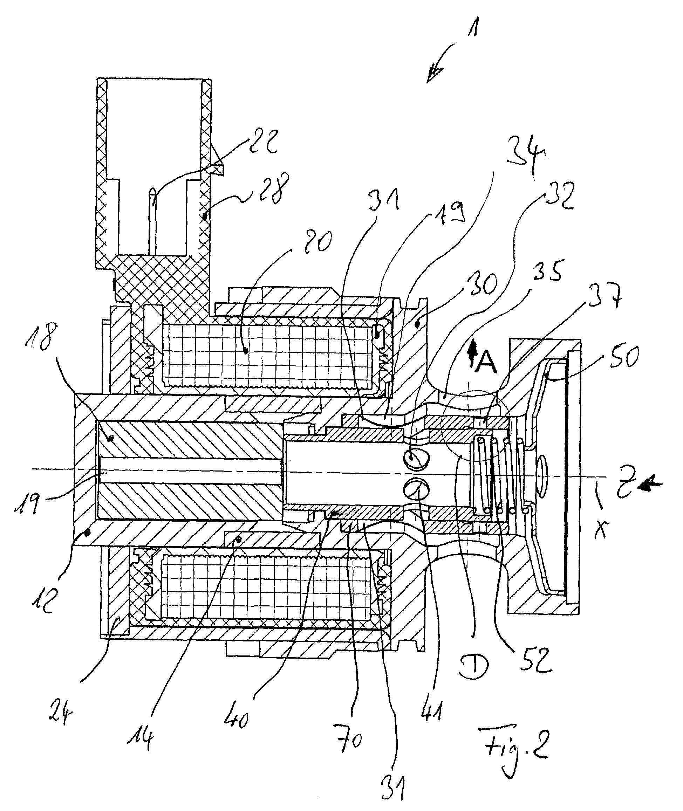

In Figur 2 ist ein zweites Ausführungsbeispiel eines Dämpferventils dargestellt. Die bereits bekannten Bezugszeichen werden für die gleichen Teile weiter verwendet. Das Elektromagnetsystem mit Spule 20, Polkern 12, metallischem Ringkörper 14 und Kunststoffumspritzung 28 samt Steckverbinder 22 entspricht dem Ausführungsbeispiel von Figur 1, ebenso die Einstellscheibe 50 und die zugehörende Federeinrichtung 52.

Das Dämpferventil 1 unterscheidet sich in folgenden Punkten vom Dämpferventil der Figur 1. Die Ausgleichsbohrung 19 befindet sich jetzt zentrisch zur Mittenachse X und liegt demzufolge in der Mittenachse des Ankers 18. Wie in Figur 2 deutlich zu erkennen, fehlt es an dem in Figur 1 diskutierten Steuerstift. Vielmehr liegt jetzt ein rohrförmig gestalteter Ventilschieber 40 unmittelbar an der in Figur 2 rechts dargestellten Stirnfläche des Ankers 18 an. Auf der rechten Seite des Ventilschiebers 40 stützt sich, wie bereits aus Figur 1 bekannt, die Federeinrichtung 52 in Form einer Spiralfeder mit ihrem einen Ende ab und an ihrem anderen Ende an der Einstellscheibe 50. Der Ventilschieber 40 weist eine Vielzahl von vorzugsweise kreisrunden Bohrungen 41 auf, so dass das Druckmedium vom Zulauf Z in den Ventilschieber 40 fließen und über die genannten Bohrungen aus dem Ventilschieber beim Ablauf A heraustreten kann. Die Umfangswandung des Ventilschiebers 40 dient wiederum zum radialen Abdichten von Austrittsöffnungen 31, 32, die jetzt jedoch nicht unmittelbar in das Ventilsitzteil 30 eingearbeitet sind, sondern in eine koaxial auf dem Ventilschieber 40 sitzende, rohrförmigen Hülse 70, die bevorzugt aus Metall besteht.

In diese Hülse 70 sind wiederum vorzugsweise vier Austrittsbohrungen 31, 32 eingebracht. Die Austrittsöffnungen 31, 32 liegen wieder im Winkel von 90° zueinander. In Figur 2 sind die beiden sich diametral gegenüberliegenden größeren Austrittsöffnungen 31 im Schnitt zu erkennen, während eine der beiden ebenfalls sich diametral gegenüberliegenden kleineren Austrittsöffnungen 32 lediglich teilweise durch die Bohrungen 41 des Ventilschiebers 40 zu erkennen ist und das Bezugszeichen 32 trägt. Zu erkennen ist, dass der in Figur 2 rechte Rand der beiden größeren Austrittsöffnungen 31 bezogen auf die Mittenachse X des Dämpferventils 1 etwas weiter rechts liegt als der rechte Rand der kleineren Austrittsöffnung 31. In das Ventilsitzteil 30 ist ein Kanal 34 ausgehend von diesen Austrittsöffnungen eingearbeitet, welcher in die Bohrungen 35 des Ablaufes A des Dämpferventils 1 führen. Der Kanal 34 und die Bohrungen 35 sind dabei so dimensioniert, dass diese einen größeren Gesamtdurchmesser haben als die Austrittsöffnungen 31, 32.

In Figur 2 ist das Dämpferventil in seiner Hubanfangsstellung gezeigt. Die Austrittsöffnungen 31, 32 sind teilweise von der umlaufenden Außenwandung des Ventilschiebers 40 abgedeckt. Bei Bestromung der Spule 20 bewegt sich der Anker nach rechts und drückt damit den Ventilschieber 40 ebenfalls nach rechts, so dass die Austrittsöffnungen 31, 32 weiter verschlossen werden und die gewünschte Drosselwirkung eintritt.

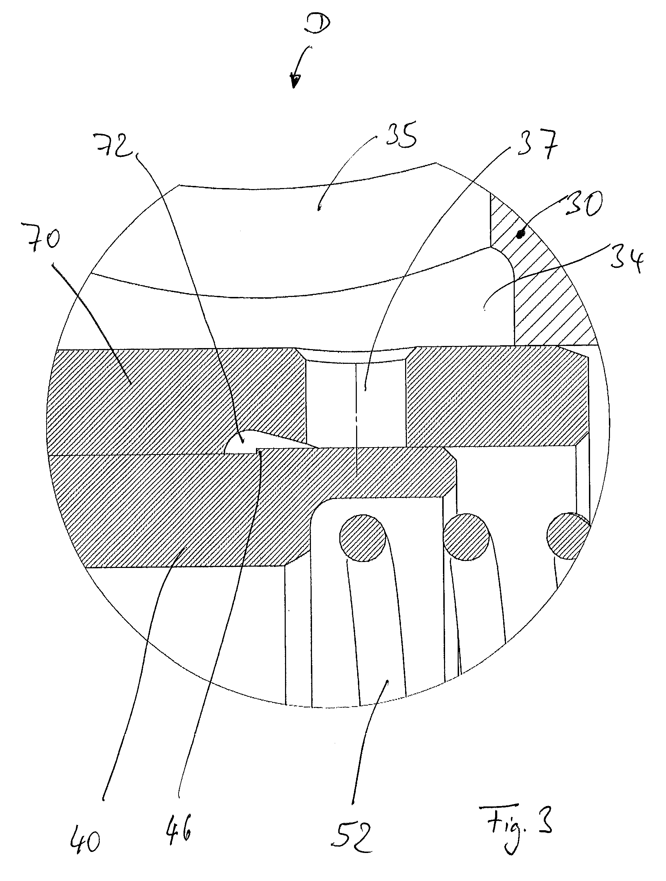

Die in Figur 1 über den Steuerstift 60 realisierte Differenzflächenfunktion wird bei dem Ausführungsbeispiel von Figur 2 über eine gestufte Außenkontur des Ventilschiebers 40 erreicht. Dieses Detail ist in Figur 2 mit D markiert und in Figur 3 vergrößert dargestellt. Der Ventilschieber 40 weist an seinem der Federeinrichtung 52 zugewandten Ende einen ringförmig verlaufenden Vorsprung 46 auf, welcher von einer im Querschnitt gesehen sichelförmigen, umlaufenden Aussparung 72, die in die Hülse 70 eingearbeitet ist, umgeben ist. Zusätzlich ist in die Hülse 70 eine radial zur Mittenachse X verlaufende Ausgleichsbohrung 37 eingearbeitet. Wie Figur 2 zeigt, können mehrere solche Ausgleichsbohrungen 37 vorgesehen sein. In Figur 2 sind in der Schnittdarstellung zwei dieser Ausgleichsbohrungen 37 in der Hülse 70 zu erkennen. Die Ausgleichsbohrung 37 steht mit dem Kanal 34 und damit auch mit der zum Ablauf A führenden Bohrung 35 des Ventilsitzteiles 30 in Verbindung. An seinem in Figur 3 unten gezeigten Ende geht diese Ausgleichsbohrung 37 in die sichelförmige Ausnehmung 72 über. Damit steht sowohl in der Ausgleichsbohrung 37 als auch in der sichelförmigen Ausnehmung 72 der gleiche Druck an wie im Ablauf A.

Ist beispielsweise das Dämpferventil 1 in Figur 2 auf ein "hartes" Fahrwerk eingestellt, befindet sich der Ventilschieber 40 aufgrund der entsprechenden Bestromungsspule 20 und der damit verbundenen Axialbewegung des Ankers 18 nach rechts in einer Stellung, in der die Austrittsöffnungen 31, 32 der Hülse 70 mehr verschlossen sind als in der Stellung, die Figur 2 zeigt. Bei einem plötzlichen Druckanstieg im Zulauf Z, wie dies beim Überfahren eines Schlagloches sein kann, kann über die durch den ringförmigen Vorsprung 46 gebildete Differenzfläche der Ventilschieber 40 den Anker 18 kurzzeitig aufgrund der anstehenden Kraft nach links drücken, so dass ein größerer Durchfluss in den Austrittsöffnungen 31, 32 freigegeben wird. Der Druck kann sich hierbei reduzieren, so dass der Schlag auf das Fahrwerk deutlich besser abgefedert wird.

Die Anordnung in Figur 2 hat den Vorteil, dass das gesamte Dämpferventil 1 axial kürzer gebaut werden kann als die Anordnung von Figur 1.

### Bezugszeichenliste

- 1: Dämpferventil

- 12: Polkern
- 14: Ringkörper
- 18: Anker
- 19: Ausgleichsbohrung

- 20: Spule
- 21: Spulenträger
- 22: Steckverbinder
- 24: Rückflussplatte
- 26: zylindrische Gehäusewand
- 28: Kunststoffumspritzung

- 30: Ventilsitzteil
- 31: erste Austrittsöffnung
- 32: zweite Austrittsöffnung
- 33: Ausgleichsbohrung
- 34: Kanal
- 35: Bohrung
- 37: Ausgleichsbohrung

- 40: Ventilschieber
- 41: Bohrung
- 42: Ausnehmung
- 44: Bohrung
- 46: Vorsprung

- 50: Einstellscheibe
- 52: Federeinrichtung

- 60: Steuerstift

- 70: Hülse
- 72: Mittenachse

- A: Ablauf

- B: Detail
- D: Detail
- X: Mittelachse
- Z: Zulauf

## Patentansprüche

1. Dämpferventil, insbesondere für Stoßdämpfer von Fahrzeugen, mit einstellbarer Dämpfungskraft, bei welchem über einen Elektromagneten mindestens eine zwischen einem Zulauf (Z) und einem Ablauf (A) liegende und in einem Ventilsitzteil (30) oder einer Hülse (70) ausgebildeten Austrittsöffnung (31, 32) von einem Ventilschieber (40) mehr oder weniger verschließbar ist,
**dadurch gekennzeichnet, dass** mindestens zwei unterschiedlich groß ausgebildete, jeweils als Bohrungen ausgebildete, Austrittsöffnungen (31, 32) vorgesehen sind, und dass diese Austrittsöffnungen (31, 32) von dem Ventilschieber (40) je nach gewünschter Drosselwirkung mehr oder weniger radial abdichtbar sind, wobei die unterschiedlich großen Austrittsöffnungen (31, 32) in Bezug auf den Ventilschieber (40) so angeordnet sind, dass die große Austrittsöffnung (32) erst dann vom Ventilschieber (40) vollständig geöffnet wird wenn bereits die kleinen Austrittsöffnungen (31) vom Ventilschieber (40) vollständig geöffnet sind.

2. Dämpferventil nach Anspruch 1,
**dadurch gekennzeichnet, dass** die Austrittsöffnungen (31, 32) kreisrunde Bohrungen sind.

3. Dämpferventil nach Anspruch 1 oder 2,
**dadurch gekennzeichnet, dass** vier Austrittsöffnungen (31, 32) vorgesehen sind, wobei diese vier Austrittsöffnungen (31, 32) im Winkel von 90° zueinander angeordnet sind.

4. Dämpferventil nach Anspruch 3,
**dadurch gekennzeichnet, dass** sich jeweils zwei der gleich großen Austrittsöffnungen (31, 32) diametral gegenüberliegen.

5. Dämpferventil nach einem der Ansprüche 1 bis 4,
**dadurch gekennzeichnet, dass** die unterschiedlich großen Austrittsöffnungen (31, 32) mit ihrem Öffnungsmittelpunkt bezogen auf eine Mittenachse (X) des Dämpferventils auf gleicher axialer Höhe angeordnet sind.

6. Dämpferventil nach einem der Ansprüche 1 bis 5,
**dadurch gekennzeichnet, dass** eine hydraulische Rückführung vom Ablauf (A) in Richtung Anker (18) vorgesehen ist.

7. Dämpferventil nach einem der Ansprüche 1 bis 6,
**dadurch gekennzeichnet, dass** zwischen Anker (18) und Ventilschieber (40) ein Steuerstift (60) lose eingelegt ist.

8. Dämpferventil nach Anspruch 7,
**dadurch gekennzeichnet, dass** der Steuerstift (60) einen Durchmesser kleiner 1 mm, vorzugsweise 0,6 bis 0,8 mm, aufweist.

9. Dämpferventil nach einem der Ansprüche 1 bis 8,
**dadurch gekennzeichnet, dass** im Anker (18) eine den Anker (18) durchsetzende Ausgleichsbohrung (19) vorgesehen ist.

10. Dämpferventil nach einem der Ansprüche 1 bis 9,
**dadurch gekennzeichnet, dass** der Ventilschieber (40) topfförmig ausgebildet ist und an seinem Boden mit einer den Boden des Ventilschiebers (40) durchdringenden Ausgleichsbohrung (44) versehen ist.

11. Dämpferventil nach einem der vorangegangenen Ansprüche, **dadurch gekennzeichnet, dass** ein Ventilsitzteil (30) vorgesehen ist, in welchem die unterschiedlich großen Austrittsöffnungen (31, 32) angeordnet sind und in welchem der Ventilschieber (40) geführt ist.

12. Dämpferventil nach Anspruch 11,
**dadurch gekennzeichnet, dass** in dem Ventilsitzteil (30) eine vom Ablauf (A) in Richtung Anker (18) angeordnete Ausgleichsbohrung (44) angeordnet ist.

13. Dämpferventil nach Anspruch 11 und 12,
**dadurch gekennzeichnet, dass** das Ventilsitzteil (30) einen sich vom Anker (18) weg erstreckenden Kragen aufweist, in welchem eine Einstellscheibe (50) festgelegt ist, welche über eine Federeinrichtung (52) gegen ein stirnseitiges Ende des Ventilschiebers (40) drückt.

14. Dämpferventil nach einem der vorangegangenen Ansprüche, **dadurch gekennzeichnet, dass** die Hülse (70) zwischen Ventilsitzteil (30) und Ventilschieber (40) angeordnet ist.

15. Dämpferventil nach Anspruch 14,
**dadurch gekennzeichnet, dass** in der Hülse (70) vier kreisrunde Austrittsöffnungen (31, 32) angeordnet sind, wobei sich zwei jeweils gleich große Austrittsöffnungen (31, 32) diametral gegenüberliegen.

16. Dämpferventil nach einem der vorangegangenen Ansprüche, **dadurch gekennzeichnet, dass** der Ventilschieber (40) hohlzylinderförmig ausgebildet und mit Bohrungen versehen ist.

17. Dämpferventil nach einem der vorangegangenen Ansprüche, **dadurch gekennzeichnet, dass** das Ventilsitzteil (30) von seinem Ablauf (A) zu den Austrittsöffnungen (31, 32) der Hülse (70) einen Kanal (34) aufweist, der einen größeren Querschnitt als die Austrittsöffnungen (31, 32) aufweist.

18. Dämpferventil nach einem vorangegangenen Ansprüche,
**dadurch gekennzeichnet, dass** dieses als normal-geschlossenes-Dämpferventil ausgebildet ist.

19. Dämpferventil nach einem der vorangegangenen Ansprüche, **dadurch gekennzeichnet, dass** dieses als normal-offenes-Dämpferventil ausgebildet ist.

## Claims

1. Damper valve, in particular for shock absorbers of vehicles, having adjustable damping force, in which at least one output opening (31, 32) lying between an inlet (Z) and an outlet (A) and formed in a valve seat part (30) or a sleeve (70) is able to be locked to a greater or lesser extent by a valve slide (40) via an electromagnet, **characterised in that** at least two output openings (31, 32), formed to be different in size and formed as bores respectively, are provided, and these output openings (31, 32) are able to be sealed radially to a greater or lesser extent by the valve slide (40) depending on the desired nozzle action, wherein the differently sized outlet openings (31, 32) are arranged with regard to the valve slide (40) such that the large output opening (32) is only then completely opened by the valve side (40) if the small output openings (31) have already been completely opened by the valve slide (40).

2. Damper valve according to claim 1,
**characterised in that** the output openings (31, 32) are circular bores.

3. Damper valve according to claim 1 or 2,
**characterised in that** four output openings (31, 32) are provided, wherein these four output openings (31, 32) are arranged at an angle of 90° to one another.

4. Damper valve according to claim 3,
**characterised in that** two of the equally sized output openings (31, 32) lie diametrically opposite each other respectively.

5. Damper valve according to one of claims 1 to 4, **characterised in that** the differently sized output openings (31, 32) are arranged with their opening centre point at the same axial height with regard to a central axis (X).

6. Damper valve according to one of claims 1 to 5, **characterised in that** a hydraulic return from the outlet (A) in the direction of an armature (18) is provided.

7. Damper valve according to one of claims 1 to 6, **characterised in that** a control pin (60) is inserted loosely between the armature (18) and the valve slide (40).

8. Damper valve according to claim 7,
**characterised in that** the control pin (60) has a diameter smaller than 1mm, preferably 0.6 to 0.8mm.

9. Damper valve according to one of claims 1 to 8, **characterised in that** a compensation bore (19) penetrating the armature (18) is provided in the armature (18).

10. Damper valve according to one of claims 1 to 9, **characterised in that** the valve slide (40) is formed to be pot-shaped and is provided with a compensation bore (44) penetrating the base of the valve slide (40) on its base.

11. Damper valve according to one of the preceding claims, **characterised in that** a valve seat part (30) is provided in which the differently sized output openings (31, 32) are arranged and in which the valve slide (40) is guided.

12. Damper valve according to claim 11,
**characterised in that** a compensation bore (44) arranged in the direction of the armature (18) from the outlet (A) is arranged in the valve seat part (30).

13. Damper valve according to claim 11 and 12, **characterised in that** the valve seat part (30) has a collar extending away from the armature (18), in which an adjustment disc (50) is set which presses against a frontside end of the valve slide (40) via a spring device (52).

14. Damper valve according to one of the preceding claims, **characterised in that** the sleeve (70) is arranged between the valve seat part (30) and the valve slide (40).

15. Damper valve according to claim 14,
**characterised in that** four circular output openings (31, 32) are arranged in the sleeve (70), wherein two respective, equally sized output openings (31, 32) lie diametrically opposite each other.

16. Damper valve according to one of the preceding claims, **characterised in that** the valve slide (40) is formed as a hollow cylinder and is provided with bores.

17. Damper valve according to one of the preceding claims, **characterised in that** the valve seat part (30) has a channel (34) from its outlet (A) to the output openings (31, 32) of the sleeve (70), said channel having a larger cross-section that the output openings (31, 32).

18. Damper valve according to one of the preceding claims, **characterised in that** this is formed as a normally-closed damper valve.

19. Damper valve according to one of the preceding claims, **characterised in that** this is formed as a normally-open damper valve.

## Revendications

1. Soupape d'amortissement en particulier pour des absorbeurs de chocs de véhicule ayant une force d'amortissement réglable, dans laquelle au moyen d'un électro-aimant, au moins une ouverture de sortie (31, 32) située entre une entrée (Z) et une sortie (A) et réalisée dans une partie de siège de soupape (30) ou une douille (70) peut être fermée plus ou moins par un tiroir de soupape (40),
**caractérisée en ce qu'**
il est prévu au moins deux ouvertures de sortie (31, 32) de dimensions différentes réalisées chacune sous la forme de perçages, et ces ouvertures de sortie peuvent être plus ou moins fermées radialement de façon étanche par le tiroir de soupape (40) en fonction de l'effet d'étranglement souhaité, les ouvertures de sortie (31, 32) de dimensions différentes étant positionnées par rapport au tiroir de soupape (40) de sorte que la grande ouverture de sortie (32) ne soit ouverte complètement par le tiroir de soupape (40) que lorsque, les petites ouvertures de sortie (31) sont déjà totalement ouvertes par le tiroir de soupape (40).

2. Soupape d'amortissement conforme à la revendication 1,
**caractérisée en ce que**
les ouvertures de sortie (31, 32) sont des perçages circulaires.

3. Soupape d'amortissement conforme à la revendication 1 ou 2, **caractérisée en ce qu'**
il est prévu quatre ouvertures de sortie (31, 32), ces quatre ouvertures de sortie (31, 32) étant positionnées selon des angles de 90° les unes par rapport aux autres.

4. Soupape d'amortissement conforme à la revendication 3, **caractérisée en ce que**
deux ouvertures de sortie (31, 32) de même dimension sont respectivement diamétralement opposées.

5. Soupape d'amortissement conforme à l'une des revendications 1 à 4, **caractérisée en ce que**
les ouvertures de sortie (31, 32) ayant des dimensions différentes sont situées à la même hauteur axiale par leur point d'ouverture médian par rapport à l'axe médian (X) de la soupape d'amortissement.

6. Soupape d'amortissement conforme à l'une des revendications 1 à 5, **caractérisée en ce qu'**
il est prévu un retour hydraulique à partir de la sortie (A) en direction de l'induit (18).

7. Soupape d'amortissement conforme à l'une des revendications 1 à 6, **caractérisée en ce qu'**
une broche de commande (60) est insérée de façon amovible entre l'induit (18) et le tiroir de soupape (40).

8. Soupape d'amortissement conforme à la revendication 7, **caractérisée en ce que**
la broche de commande (60) a un diamètre inférieur à 1 mm, de préférence de 0,6 à 0,8 mm.

9. Soupape d'amortissement conforme à l'une des revendications 1 à 8, **caractérisée en ce que**
dans l'induit (18), il est prévu un perçage d'équilibrage (19) traversant l'induit (18).

10. Soupape d'amortissement conforme à l'une des revendications 1 à 9,
**caractérisée en ce que**
le tiroir de soupape (40) est réalisé en forme de pot et est équipé au niveau de son fond d'un perçage d'équilibrage (44) traversant le fond du tiroir de soupape (40).

11. Soupape d'amortissement conforme à l'une des revendications précédentes,
**caractérisée en ce qu'**
il est prévu une partie formant un siège de soupape (30) dans laquelle sont positionnées les ouvertures de sortie (31, 32) de dimensions différentes et dans laquelle est guidé le tiroir de soupape (40).

12. Soupape d'amortissement conforme à la revendication 11, **caractérisée en ce que**
la partie formant siège de soupape (30) comporte un perçage d'équilibrage (44) s'étendant à partir de la sortie (A) en direction de l'induit (18).

13. Soupape d'amortissement conforme à la revendication 11 et 12, **caractérisée en ce que**
la partie formant siège de soupape (30) comporte une collerette s'étendant en s'éloignant de l'induit (18) dans laquelle est fixé un disque de réglage (50) qui s'appuie par l'intermédiaire d'un dispositif à ressort (52) contre une extrémité frontale du tiroir de soupape (40).

14. Soupape d'amortissement conforme à l'une des revendications précédentes,
**caractérisée en ce que**
la douille (70) est positionnée entre la partie formant siège de soupape (30) et le tiroir de soupape (40).

15. Soupape d'amortissement conforme à la revendication 14, **caractérisée en ce que**
quatre ouvertures de sortie circulaires (31, 32) sont situées dans la douille (70), deux ouvertures de sortie (31, 32) de même dimension respectives étant diamétralement opposées.

16. Soupape d'amortissement conforme à l'une des revendications précédentes,
**caractérisée en ce que**
le tiroir de soupape (40) est en forme de cylindre creux et est équipé de perçages.

17. Soupape d'amortissement conforme à l'une des revendications précédentes,
**caractérisée en ce que**
la partie formant siège de soupape (30) comporte, de sa sortie (A) vers les ouvertures de sortie (31, 32) de la douille (70) un canal (34) qui a une section supérieure à celle des ouvertures de sortie (31, 32).

18. Soupape d'amortissement conforme à l'une des revendications précédentes,
**caractérisée en ce qu'**
elle est réalisée sous la forme d'une soupape d'amortissement normalement fermée.

19. Soupape d'amortissement conforme à l'une des revendications précédentes,
**caractérisée en ce qu'**
elle est réalisée sous la forme d'une soupape normalement ouverte.
